(19) Europäisches Patentamt
European Patent Office
Office européen des brevets

(11) **EP 2 850 710 B1**

(12) **EUROPÄISCHE PATENTSCHRIFT**

(45) Veröffentlichungstag und Bekanntmachung des Hinweises auf die Patenterteilung:
**10.02.2016 Patentblatt 2016/06**

(21) Anmeldenummer: **12735806.7**

(22) Anmeldetag: **26.06.2012**

(51) Int Cl.:
*H02J 3/12* (2006.01)     *H02J 3/14* (2006.01)

(86) Internationale Anmeldenummer:
**PCT/EP2012/062315**

(87) Internationale Veröffentlichungsnummer:
**WO 2014/000770 (03.01.2014 Gazette 2014/01)**

(54) **ENERGIEVERSORGUNGSANLAGE**

POWER SUPPLY SYSTEM

INSTALLATION D'ALIMENTATION EN ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.03.2015 Patentblatt 2015/13**

(73) Patentinhaber: **Siemens Aktiengesellschaft 80333 München (DE)**

(72) Erfinder: **PLÖTT, Norbert 91058 Erlangen (DE)**

(56) Entgegenhaltungen:
**WO-A1-2005/029670     GB-A- 2 361 118**

**Beschreibung**

Die Erfindung bezieht sich auf eine Energieversorgungsanlage mit einer Mehrzahl an Energieerzeugungseinrichtungen und einer Mehrzahl an Energieverbrauchseinrichtungen, wobei die Energieerzeugungseinrichtungen und die Energieverbrauchseinrichtungen durch ein Energieübertragungsnetz verbunden sind.

In einer Energieversorgungsanlage für elektrische Energie muss stets ein Gleichgewicht zwischen eingespeister und entnommener elektrischer Leistung gewährleistet sein. Lastschwankungen müssen innerhalb von Sekunden nach ihrem Auftreten kompensiert werden, damit die System- bzw. Netzfrequenz der Energieversorgungsanlage bzw. des Energieverteilnetzes der Energieversorgungsanlage in vorgegebenen engen Grenzen bleibt.

Damit ein solches Gleichgewicht erreicht werden kann, werden üblicherweise synchron mit der Systemfrequenz mitlaufende Energieerzeugungseinrichtungen bzw. Generatoren nicht bis zu ihrer Nennleistung voll ausgelastet, sondern es wird stets eine gewisse Regelreserve vorgehalten.

Aus der WO 2005/029670 A1 ist es bekannt, anhand einer Netzfrequenz auf einen Belastungszustand eines Energieverteilnetzes zu schließenn und eine Last in Abhängigkeit von dem Belastungszustand anzusteuern.

Der Erfindung liegt die Aufgabe zugrunde, eine Energieversorgungsanlage anzugeben, mit der sich Netzfrequenzschwankungen schneller ausgleichen lassen als bei bisherigen Energieversorgungsanlagen.

Diese Aufgabe wird erfindungsgemäß durch eine Energieversorgungsanlage mit den Merkmalen gemäß Patentanspruch 1 gelöst. Vorteilhafte Ausgestaltungen der erfindungsgemäßen Energieversorgungsanlage sind in Unteransprüchen angegeben.

Danach ist erfindungsgemäß vorgesehen, dass zumindest eine der Energieerzeugungseinrichtungen oder zumindest eine der Energieverbrauchseinrichtungen eine Steuereinrichtung aufweist, die geeignet ist, im Falle einer Änderung der Netzfrequenz des Energieübertragungsnetzes die Leistungsabgabe oder Leistungsaufnahme ihrer Energieerzeugungseinrichtung oder Energieverbrauchseinrichtung zumindest kurzzeitig um einen Leistungsänderungswert zu ändern, der proportional zur zeitlichen Änderung der Netzfrequenz des Energieübertragungsnetzes ist.

Ein wesentlicher Vorteil der erfindungsgemäßen Energieversorgungsanlage besteht darin, dass sich Netzfrequenzänderungen des Energieübertragungsnetzes besonders schnell ausgleichen lassen, da im Falle einer Änderung der Netzfrequenz eine Änderung der Leistungsabgabe oder Leistungsaufnahme erfolgt, wobei diese Änderung erfindungsgemäß zur zeitlichen Änderung der Netzfrequenz proportional ist. Je schneller sich also die Netzfrequenz ändert, umso größer wird auch die zusätzliche Leistungsabgabe oder Leistungsaufnahme sein, wodurch in vorteilhafter Weise einer Netzfrequenzänderung besonders effizient und schnell entgegengewirkt wird.

Besonders einfach und damit vorteilhaft lässt sich eine zusätzliche Leistungsabgabe oder Leistungsaufnahme durch das Vorsehen eines Energiespeichers ermöglichen; demgemäß wird es als vorteilhaft angesehen, wenn mit der Steuereinrichtung ein Energiespeicher verbunden ist, und die Steuereinrichtung derart ausgestaltet ist, dass sie im Falle einer Vergrößerung der Netzfrequenz des Energieübertragungsnetzes eine zur zeitlichen Änderung der Netzfrequenz proportionale Energiemenge aus dem Energieübertragungsnetz entnimmt und in dem Energiespeicher abspeichert und im Falle einer Verkleinerung der Netzfrequenz des Energieübertragungsnetzes eine zur zeitlichen Änderung der Netzfrequenz proportionale Energiemenge aus dem Energiespeicher entnimmt und in das Energieübertragungsnetz einspeist.

Um einen Anschluss der zumindest einen Energieerzeugungseinrichtung oder der zumindest einen Energieverbrauchseinrichtung an das Energieübertragungsnetz in einfacher Weise zu ermöglichen, wird es als vorteilhaft angesehen, wenn die zumindest eine Energieerzeugungseinrichtung oder die zumindest eine Energieverbrauchseinrichtung einen Umrichter mit mindestens einem Zwischenkreiskondensator aufweist.

Ist ein solcher Umrichter vorhanden, so wird es als vorteilhaft angesehen, wenn der Energiespeicher durch den mindestens einen Zwischenkreiskondensator des Umrichters gebildet wird und die Steuereinrichtung derart ausgestaltet ist, dass sie im Falle einer Vergrößerung der Netzfrequenz des Energieübertragungsnetzes eine zur zeitlichen Änderung der Netzfrequenz proportionale Energiemenge aus dem Energieübertragungsnetz entnimmt und in dem Zwischenkreiskondensator des Umrichters abspeichert und im Falle einer Verkleinerung der Netzfrequenz des Energieübertragungsnetzes eine zur zeitlichen Änderung der Netzfrequenz proportionale Energiemenge aus dem Zwischenkreiskondensator des Umrichters entnimmt und in das Energieübertragungsnetz einspeist.

Alternativ kann eine Zwischenspeicherung von Energie auch in einer Batterie erfolgen; demgemäß wird es gemäß einer anderen Ausgestaltung der Energieversorgungsanlage als vorteilhaft angesehen, wenn die zumindest eine Energieerzeugungseinrichtung oder die zumindest eine Energieverbrauchseinrichtung als Energiespeicher eine Batterie umfasst, aus der im Falle einer Änderung der Netzfrequenz des Energieübertragungsnetzes Energie entnommen oder Energie eingespeist wird, wobei die entnommene oder eingespeiste Leistung proportional zur zeitlichen Änderung der Netzfrequenz des Energieübertragungsnetzes ist.

Darüber hinaus ist es möglich, eine Energiezwischenspeicherung sowohl in einem Zwischenkreiskondensator eines Umrichters als auch in einer Batterie vorzunehmen; demgemäß wird es auch als vorteilhaft angesehen, wenn die zumindest eine Energieerzeugungseinrichtung oder die zumindest eine Energieverbrauchseinrichtung einen Umrichter mit mindestens einem Zwischenkreiskondensator, mindestens eine Batterie und eine Steuereinrichtung aufweist, wobei die Steuereinrichtung derart ausgestaltet ist, dass sie im Falle einer Vergrößerung der Netzfrequenz des Energieübertragungsnetzes eine zur zeitlichen Änderung der Netzfrequenz proportionale Energiemenge aus dem Energieübertragungsnetz entnimmt und in dem Zwischenkreiskondensator und der Batterie abspeichert und im Falle einer Verkleinerung der Netzfrequenz des Energieübertragungsnetzes eine zur zeitlichen Änderung der Netzfrequenz proportionale Energiemenge aus dem Zwischenkreiskondensator und der Batterie entnimmt und in das Energieübertragungsnetz einspeist.

Vorzugsweise handelt es sich bei der zumindest einen Energieerzeugungseinrichtung um eine Solarenergieerzeugungseinrichtung oder eine Windenergieerzeugungseinrichtung.

Die Erfindung bezieht sich darüber hinaus auf eine Energieerzeugungseinrichtung für eine ein Energieübertragungsnetz aufweisende Energieversorgungsanlage, wie sie oben beschrieben ist. Erfindungsgemäß ist bezüglich einer solchen Energieerzeugungseinrichtung vorgesehen, dass eine Steuereinrichtung der Energieerzeugungseinrichtung derart ausgestaltet ist, dass sie im Falle einer Änderung der Netzfrequenz des Energieübertragungsnetzes die Leistungsabgabe der Energieerzeugungseinrichtung zumindest kurzzeitig um einen Leistungsänderungswert ändert, der proportional zur zeitlichen Änderung der Netzfrequenz des Energieübertragungsnetzes ist.

Bezüglich der Vorteile der erfindungsgemäßen Energieerzeugungseinrichtung sei auf die obigen Ausführungen im Zusammenhang mit der erfindungsgemäßen Energieversorgungsanlage verwiesen, da die Vorteile der erfindungsgemäßen Energieversorgungsanlage denen der erfindungsgemäßen Erzeugungseinrichtung entsprechen.

Bezüglich der Ausgestaltung der Energieerzeugungseinrichtung wird es als vorteilhaft angesehen, wenn die Steuereinrichtung derart ausgestaltet ist, dass sie im Falle einer Vergrößerung der Netzfrequenz des Energieübertragungsnetzes eine zur zeitlichen Änderung der Netzfrequenz proportionale Energiemenge aus dem Energieübertragungsnetz entnimmt und in einem Energiespeicher der Energieerzeugungseinrichtung abspeichert und im Falle einer Verkleinerung der Netzfrequenz des Energieübertragungsnetzes eine zur zeitlichen Änderung der Netzfrequenz proportionale Energiemenge aus dem Energiespeicher entnimmt und in das Energieübertragungsnetz einspeist.

Die Erfindung bezieht sich darüber hinaus auf eine Energieverbrauchseinrichtung für eine ein Energieübertragungsnetz aufweisende Energieversorgungsanlage, wie sie oben beschrieben worden ist. Erfindungsgemäß ist bezüglich einer solchen Energieverbrauchseinrichtung vorgesehen, dass eine Steuereinrichtung der Energieverbrauchseinrichtung derart ausgestaltet ist, dass sie im Falle einer Änderung der Netzfrequenz des Energieübertragungsnetzes die Leistungsaufnahme der Energieverbrauchseinrichtung zumindest kurzzeitig um einen Leistungsänderungswert ändert, der proportional zur zeitlichen Änderung der Netzfrequenz des Energieübertragungsnetzes ist.

Bezüglich der Vorteile der erfindungsgemäßen Energieverbrauchseinrichtung sei auf die obigen Ausführungen im Zusammenhang mit der erfindungsgemäßen Energieversorgungsanlage verwiesen, da die Vorteile der erfindungsgemäßen Energieversorgungsanlage denen der erfindungsgemäßen Energieverbrauchseinrichtung entsprechen.

Bezüglich der Energieverbrauchseinrichtung wird es als besonders vorteilhaft angesehen, wenn die Steuereinrichtung derart ausgestaltet ist, dass sie im Falle einer Vergrößerung der Netzfrequenz des Energieübertragungsnetzes eine zur zeitlichen Änderung der Netzfrequenz proportionale Energiemenge aus dem Energieübertragungsnetz entnimmt und in einem Energiespeicher der Energieverbrauchseinrichtung abspeichert und im Falle einer Verkleinerung der Netzfrequenz des Energieübertragungsnetzes eine zur zeitlichen Änderung der Netzfrequenz proportionale Energiemenge aus dem Energiespeicher entnimmt und in das Energieübertragungsnetz einspeist.

Die Erfindung bezieht sich darüber hinaus auf ein Verfahren zum Betreiben einer Energieversorgungsanlage mit einer Mehrzahl an Energieerzeugungseinrichtungen und einer Mehrzahl an Energieverbrauchseinrichtungen, wobei die Energieerzeugungseinrichtungen und die Energieverbrauchseinrichtungen durch ein Energieübertragungsnetz verbunden sind.

Erfindungsgemäß ist bezüglich eines solchen Verfahrens vorgesehen, dass im Falle einer Änderung der Netzfrequenz des Energieübertragungsnetzes die Leistungsabgabe oder Leistungsaufnahme zumindest einer der Energieerzeugungseinrichtungen oder zumindest einer der Energieverbrauchseinrichtungen zumindest kurzzeitig proportional zur zeitlichen Änderung der Netzfrequenz des Energieübertragungsnetzes geändert wird.

Bezüglich der Vorteile des erfindungsgemäßen Verfahrens sei auf die obigen Ausführungen im Zusammenhang mit der erfindungsgemäßen Energieversorgungsanlage verwiesen, da die Vorteile der erfindungsgemäßen Energieversorgungsanlage denen des erfindungsgemäßen Verfahrens entsprechen.

Vorzugsweise erfolgt die Änderung der Leistungsabgabe oder Leistungsaufnahme durch Zwischenspeichern von Energie in einem Energiespeicher.

Als besonders vorteilhaft wird es angesehen, wenn die Änderung der Leistungsabgabe oder Leistungsaufnahme durch Zwischenspeichern von Energie zumindest auch in einem Zwischenkreiskondensator eines Umrichters erfolgt.

Die Erfindung wird nachfolgend anhand von Ausführungsbeispielen näher erläutert; dabei zeigen beispielhaft

Figur 1      ein Ausführungsbeispiel für eine erfindungsgemäße Energieversorgungsanlage, die mit einem Ausführungsbeispiel für eine erfindungsgemäße Energieerzeugungseinrichtung sowie mit einem Ausführungsbeispiel für eine erfindungsgemäße Energieverbrauchseinrichtung ausgestattet ist,

Figur 2      ein erstes Ausführungsbeispiel für eine erfindungsgemäße Energieerzeugungseinrichtung, wie sie bei der Energieversorgungsanlage gemäß Figur 1 eingesetzt werden kann,

Figur 3      die Arbeitsweise der Energieerzeugungseinrichtung gemäß Figur 2 im Falle einer reinen P-Regelung,

Figur 4      das Zusammenwirken von P-Regelung und D-Regelung bei der Energieerzeugungseinrichtung gemäß Figur 2 näher im Detail,

Figur 5      die Überlagerung der D-Regelung und der P-Regelung bei der Energieerzeugungseinrichtung gemäß Figur 2,

Figur 6      ein Ausführungsbeispiel für eine erfindungsgemäße Energieerzeugungseinrichtung, die mit einer Batterie ausgestattet ist,

Figur 7      ein Ausführungsbeispiel für eine erfindungsgemäße Energieerzeugungseinrichtung, die mit einem Zwischenkreiskondensator und einer Batterie ausgestattet ist,

Figur 8      ein Ausführungsbeispiel für eine erfindungsgemäße Energieverbrauchseinrichtung, wie sie bei der Energieversorgungsanlage gemäß Figur 1 eingesetzt werden kann, und

Figur 9      ein Ausführungsbeispiel für eine erfindungsgemäße Energieerzeugungseinrichtung mit Primär- und Sekundärregelung.

Der Übersicht halber werden in den Figuren für identische oder vergleichbare Komponenten stets dieselben Bezugszeichen verwendet.

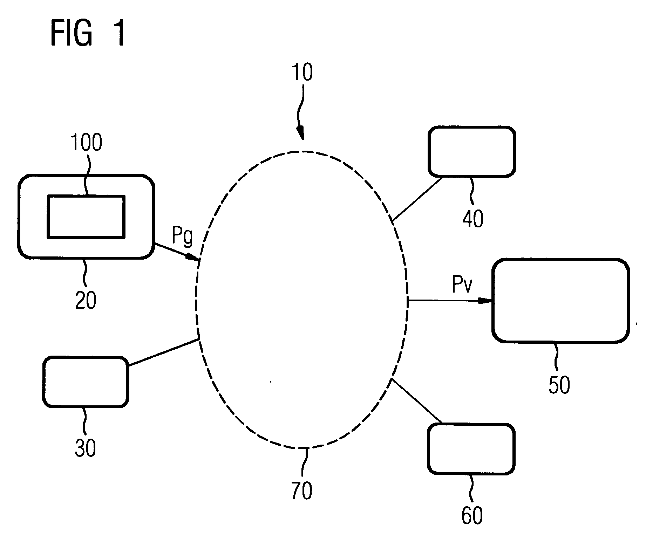

In der Figur 1 sieht man eine Energieversorgungsanlage 10, die mit zwei Energieerzeugungseinrichtungen 20 und 30 sowie drei Energieverbrauchseinrichtungen 40, 50 und 60 ausgestattet ist. Die elektrische Verbindung zwischen den Energieerzeugungseinrichtungen 20 und 30 und den Energieverbrauchseinrichtungen 40, 50 und 60 erfolgt über ein Energieübertragungsnetz 70 der Energieversorgungsanlage 10.

Bei dem Ausführungsbeispiel gemäß Figur 1 ist die Energieerzeugungseinrichtung 20 mit einer Steuereinrichtung 100 ausgestattet, die im Falle einer Änderung der Netzfrequenz des Energieübertragungsnetzes 70 die Leistung Pg der Energieerzeugungseinrichtung 20 - zumindest auch - proportional zur zeitlichen Änderung der Netzfrequenz des Energieübertragungsnetzes verändert. Wie weiter unten noch näher erläutert werden wird, wird neben einer Leistungsänderung, die proportional zur zeitlichen Änderung der Netzfrequenz ist (D-Regelung), auch eine Leistungsänderung vorgenommen, die proportional zur Netzfrequenzabweichung ist (P-Regelung).

Die Energieverbrauchseinrichtung 50 arbeitet bei dem Ausführungsbeispiel gemäß Figur 1 auch in Abhängigkeit von der zeitlichen Änderung der Netzfrequenz des Energieübertragungsnetzes 70. Wie weiter unten noch näher erläutert wird, ist die Energieverbrauchseinrichtung 50 nämlich in der Lage, den Energieverbrauch Pv durch Zwischenspeicherung von Energie kurzzeitig zumindest auch proportional zur zeitlichen Änderung der Netzfrequenz des Energieübertragungsnetzes 70 zu ändern.

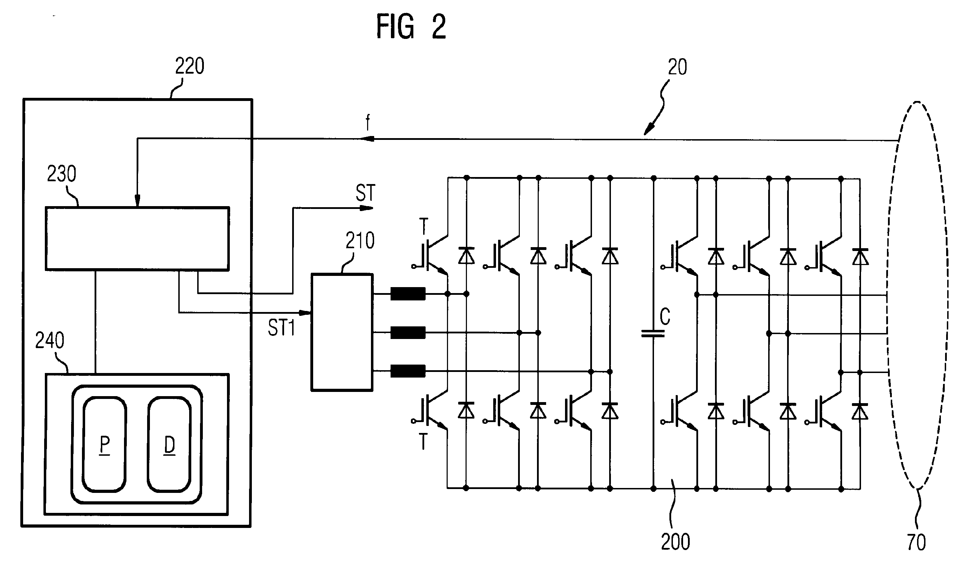

Die Figur 2 zeigt ein Ausführungsbeispiel für die Energieerzeugungseinrichtung 20 gemäß Figur 1. Man erkennt, dass die Energieerzeugungseinrichtung 20 einen Umrichter 200 aufweist, der an das Energieübertragungsnetz 70 angeschlossen ist. Darüber hinaus steht der Umrichter 200 mit einem steuerbaren Generator 210 in Verbindung, der von einer Steuereinrichtung 220 angesteuert wird. Die Steuereinrichtung 220 weist eine Recheneinrichtung 230 auf, die mit einem Speicher 240 der Steuereinrichtung 220 in Verbindung steht. In dem Speicher 240 sind u. a. zwei Programmmodule D und P abgespeichert.

Das Programmmodul D dient dazu, dass die Recheneinrichtung 230 eine D-Regelung bewirken kann. Im Rahmen der D-Regelung erzeugt die Steuereinrichtung 220 ausgangsseitig Steuersignale ST, mit denen Transistoren T des Umrichters 200 derart angesteuert werden, dass im Falle einer zeitlichen Änderung der Netzfrequenz f des Energieübertragungsnetzes 70 eine Energieabspeicherung im Zwischenkreiskondensator C des Umrichters 200 oder eine Energieentnahme aus diesem Zwischenkreiskondensator C stattfindet.

Konkret ist das Programmmodul D derart ausgestaltet, dass im Rahmen der D-Regelung eine Zwischenspeicherung von Energie, die von dem steuerbaren Generator 210 erzeugt wird, in dem Zwischenkreiskondensator C erfolgt, wenn sich die Netzfrequenz f des Energieübertragungsnetzes 70 erhöht. Die Leistung Ps1, mit der Energie in dem Zwischenkreiskondensator C des Umrichters 200 abgespeichert wird, ist dabei proportional zur zeitlichen Änderung df/dt der Netzfrequenz f. Es gilt also:

$$Ps1 = C1 * df/dt,$$

wobei C1 einen vorgegebenen Proportionalitätsfaktor bezeichnet.

In entsprechender Weise arbeitet die D-Regelung der Steuereinrichtung 220 im Falle einer Reduktion der Netzfrequenz f. In diesem Falle wird die D-Regelung über die Steuersignale ST die Transistoren T des Umrichters 200 derart ansteuern, dass aus dem Zwischenkreiskondensator C Energie entnommen und in das Energieübertragungsnetz 70 zusätzlich eingespeist wird. Die Leistung Ps2, die mit Hilfe des Zwischenkreiskondensators C in das Energieübertragungsnetz 70 zusätzlich eingespeist wird, ist dabei proportional zur zeitlichen Änderung df/dt der Netzfrequenz f. Es gilt also:

$$Ps2 = C2 * df/dt,$$

wobei C2 einen vorgegebenen Proportionalitätsfaktor bezeichnet.

Die Proportionalitätsfaktoren C1 und C2 sind vorzugsweise identisch.

Zusammengefasst ist die Steuereinrichtung 220 aufgrund des Programmmoduls D also in der Lage, eine D-Regelung der Energieerzeugungseinrichtung 20 vorzunehmen, wobei eine zusätzliche Leistungseinspeisung im Falle einer Absenkung der Netzfrequenz f und eine Reduktion der Leistungseinspeisung im Falle eines Anstiegs der Netzfrequenz f erfolgt.

Das in dem Speicher 240 zusätzliche Programmmodul P bewirkt eine P-Regelung der Steuereinrichtung 220, die parallel zu der D-Regelung erfolgt. Im Rahmen der P-Regelung wird ausgangsseitig ein Steuersignal ST1 zur Steuerung des steuerbaren Generators 210 erzeugt. Im Rahmen der P-Regelung wird die Ausgangsleistung des steuerbaren Generators 210 auf eine vorgegebene Sollleistung geregelt, wobei im Falle einer Abweichung der Netzfrequenz f von einer Sollnetzfrequenz f0 die Leistung des steuerbaren Generators 210 erhöht oder erniedrigt wird, wobei die Erhöhung oder Erniedrigung proportional zur Abweichung der Netzfrequenz f von der Sollnetzfrequenz f0 ist. Es handelt sich also um eine lineare Regelung, die abhängig von der Differenz zwischen der tatsächlichen Netzfrequenz f und der Sollnetzfrequenz f0 ist.

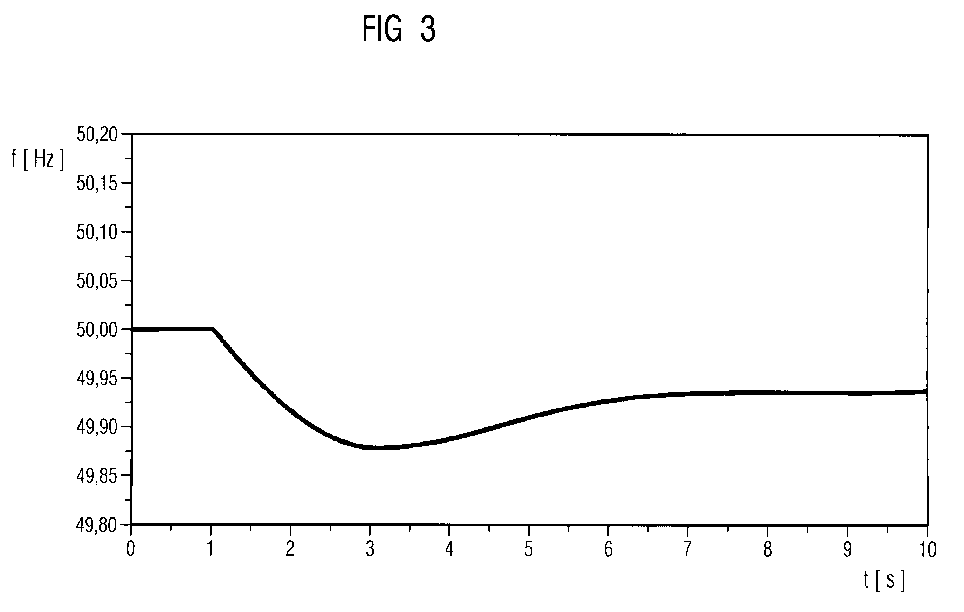

In der Figur 3 lässt sich die Arbeitsweise der Energieerzeugungseinrichtung 20 gemäß Figur 2 erkennen, wenn lediglich das Programmmodul P der Steuereinrichtung 220 aktiv ist und somit lediglich eine P-Regelung durch die Recheneinrichtung 230 durchgeführt wird. Es lässt sich erkennen, dass im Falle einer Änderung der Netzfrequenz f zu einem Zeitpunkt t=1s die P-Regelung erst sehr verzögert Wirkung entfaltet und erst ab einem Zeitpunkt t=3s dem Abfall der Netzfrequenz f wirksam entgegenwirkt, so dass erst ab dann aufgrund erhöhter Energieeinspeisung ein Wiederanstieg der Netzfrequenz f einsetzt.

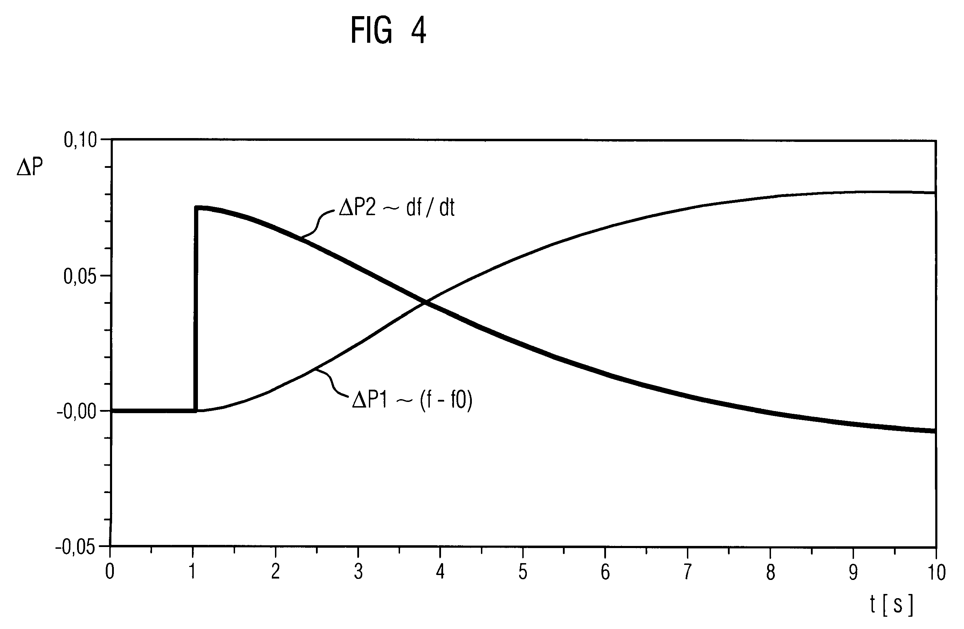

Die Figur 4 zeigt die Arbeitsweise der P-Regelung des Programmmoduls P und die D-Regelung des Programmmoduls D im Falle eines Frequenzabfalls näher im Detail.

Man erkennt, dass ab dem Zeitpunkt t=1s mit Hilfe des Steuersignals ST1 die Leistungsabgabe des steuerbaren Generators 210 um einen Wert ΔP1 langsam erhöht wird; diese Erhöhung ΔP1 ist proportional zu der Abweichung Δf zwischen der tatsächlichen Netzfrequenz f und der Sollnetzfrequenz f0. Es gilt:

$$\Delta P1 \sim (f - f0)$$

Darüber hinaus erkennt man in der Figur 4 die Wirkung der D-Regelung, die durch das Programmmodul D hervorgerufen wird. Man sieht, dass die D-Regelung bereits zum Zeitpunkt t=1s massiv einsetzt, da sie proportional zur zeitlichen Änderung df/dt der Netzfrequenz f arbeitet. Die von der D-Regelung bereitgestellte zusätzliche Leistung ΔP2 wird aus dem Zwischenkreiskondensator C des Umrichters 200 entnommen, wobei gilt:

$$\Delta P2 \sim df / dt$$

Es lässt sich also feststellen, dass im Falle eines Frequenzabfalls sowohl die D-Regelung als auch die P-Regelung eine zusätzliche Leistungsabgabe der Energieerzeugungseinrichtung 20 in das Energieübertragungsnetz 70 bewirken, wobei die P-Regelung auf einer Steuerung des steuerbaren Generators 210 und die D-Regelung auf einer Energieentnahme aus dem Zwischenkreiskondensator C beruht. Die Leistungssteigerung durch die P-Regelung ist proportional zur Frequenzabweichung, und die zusätzliche Leistungsabgabe durch die D-Regelung ist proportional zur zeitlichen Änderung der Netzfrequenz f.

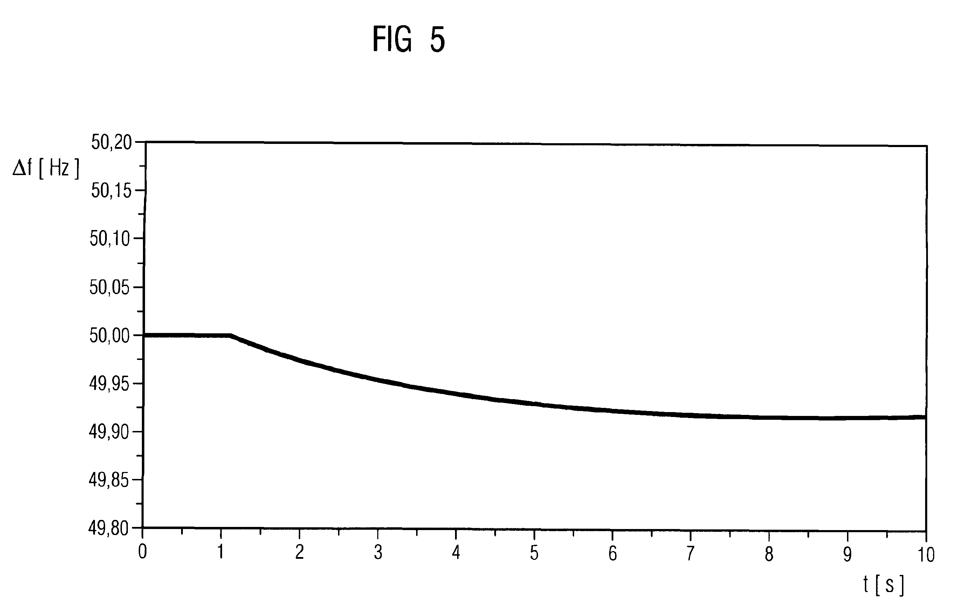

In der Figur 5 ist dargestellt, wie sich die D-Regelung und die P-Regelung überlagern. Es lässt sich erkennen, dass bei einem Zusammenwirken beider Regelungen das in der Figur 3 dargestellte Unterschwingen der Netzfrequenz f vermieden wird und es lediglich zu einem Absenken der Netzfrequenz f ohne Unterschwingverhalten kommt.

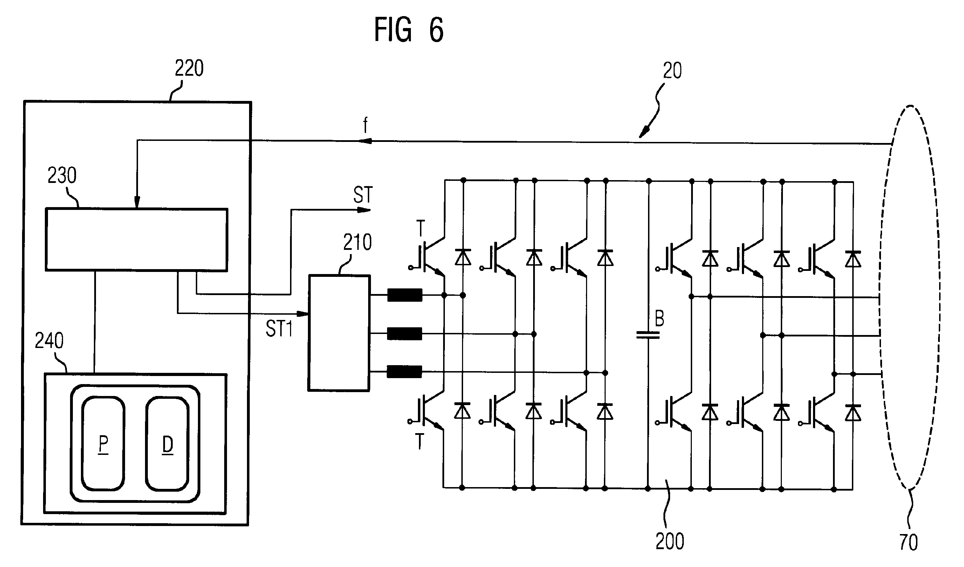

In der Figur 6 ist ein zweites Ausführungsbeispiel für eine Energieerzeugungseinrichtung 20 dargestellt, wie sie bei der Energieversorgungsanlage 10 gemäß Figur 1 eingesetzt werden kann. Man erkennt, dass anstelle eines Zwischenkreiskondensators C im Umrichter 200 eine Batterie B vorgesehen ist, die eine Energiezwischenspeicherung im Gleichspannungskreis des Umrichters 200 bewirkt. Im Übrigen entspricht das Ausführungsbeispiel gemäß Figur 6 dem Ausführungsbeispiel gemäß Figur 2.

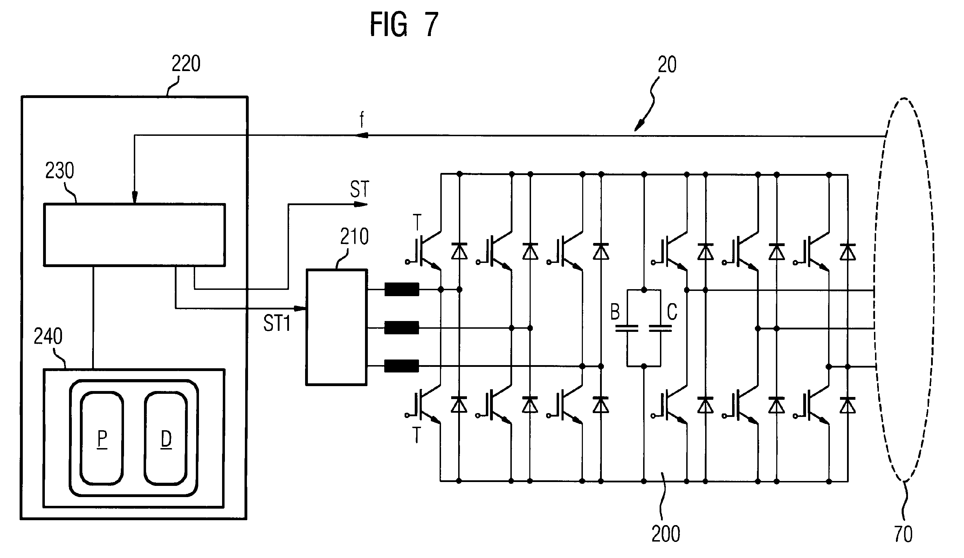

In der Figur 7 ist ein drittes Ausführungsbeispiel für eine Energieerzeugungseinrichtung 20 gezeigt, wie sie bei der Energieversorgungsanlage 10 gemäß Figur 1 eingesetzt werden kann. Bei diesem Ausführungsbeispiel ist parallel zu einem Zwischenkreiskondensator C eines Umrichters 200 eine Batterie B geschaltet, so dass eine Energiespeicherung proportional zur zeitlichen Änderung der Netzfrequenz des Energieübertragungsnetzes 70 sowohl in dem Zwischenkreiskondensator C als auch in der Batterie B möglich ist. Im Übrigen entspricht das Ausführungsbeispiel gemäß Figur 7 dem Ausführungsbeispiel gemäß Figur 2.

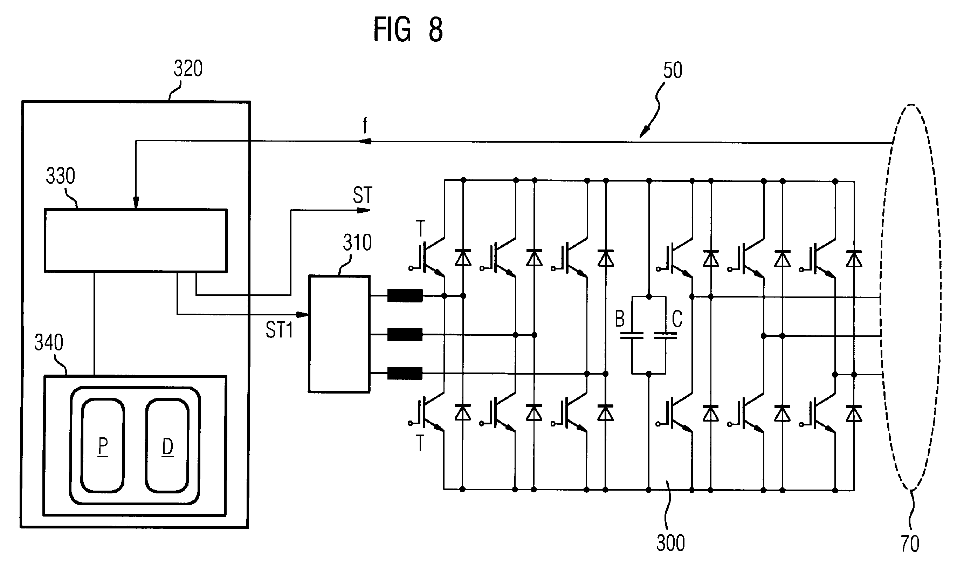

Die Figur 8 zeigt ein Ausführungsbeispiel für die Energieverbrauchseinrichtung 50 gemäß Figur 1. Man erkennt, dass die Energieverbrauchseinrichtung 50 einen Umrichter 300 aufweist, der an das Energieübertragungsnetz 70 angeschlossen ist. Darüber hinaus steht der Umrichter 300 mit einem steuerbaren Verbraucher 310 in Verbindung, der von einer Steuereinrichtung 320 angesteuert wird. Die Steuereinrichtung 320 weist eine Recheneinrichtung 330 auf, die mit einem Speicher 340 der Steuereinrichtung 320 in Verbindung steht. In dem Speicher 340 sind u. a. zwei Programmmodule D und P abgespeichert.

Das Programmmodul D dient dazu, durch die Recheneinrichtung 330 eine D-Regelung zu bewirken. Im Rahmen der D-Regelung erzeugt die Steuereinrichtung 320 ausgangsseitig Steuersignale ST, mit denen Transistoren T des Umrichters 300 derart angesteuert werden, dass in Abhängigkeit von der zeitlichen Änderung der Netzfrequenz f des Energieübertragungsnetzes 70 eine Energieabspeicherung im Zwischenkreiskondensator C des Umrichters 300 oder eine Energieentnahme aus diesem Zwischenkreiskondensator C stattfindet.

Konkret ist das Programmmodul D derart ausgestaltet, dass im Rahmen der D-Regelung eine Zwischenspeicherung von Energie, die von dem Energieübertragungsnetz 70 kommt, in dem Zwischenkreiskondensator C erfolgt, wenn sich die Netzfrequenz f des Energieübertragungsnetzes 70 erhöht. Die Leistung Ps1, mit der Energie in dem Zwischenkreiskondensator C des Umrichters 300 abgespeichert wird, ist dabei proportional zur zeitlichen Änderung df/dt der Netzfrequenz f. Es gilt also:

$$Ps1 = C1 * df/dt,$$

wobei C1 einen vorgegebenen Proportionalitätsfaktor bezeichnet.

In entsprechender Weise arbeitet die D-Regelung der Steuereinrichtung 320 im Falle einer Reduktion der Netzfrequenz f. In diesem Falle wird die D-Regelung über die Steuersignale ST die Transistoren T des Umrichters 300 derart ansteuern, dass aus dem Zwischenkreiskondensator C Energie entnommen und in das Energieübertragungsnetz 70 eingespeist wird. Die Leistung Ps2, die mit Hilfe des Zwischenkreiskondensators C in das Energieübertragungsnetz 70 eingespeist wird, ist dabei proportional zur zeitlichen Änderung df/dt der Netzfrequenz f. Es gilt also:

$$Ps2 = C2 * df/dt,$$

wobei C2 einen vorgegebenen Proportionalitätsfaktor bezeichnet.

Die Proportionalitätsfaktoren C1 und C2 sind vorzugsweise identisch.

Zusammengefasst ist die Steuereinrichtung 320 aufgrund des Programmmoduls D also in der Lage, eine D-Regelung vorzunehmen, wobei eine zusätzliche Leistungseinspeisung in Falle einer Absenkung der Netzfrequenz f und eine Energieaufnahme im Fall eines Anstiegs der Netzfrequenz f erfolgt.

Das in dem Speicher 340 zusätzliche Programmmodul P bewirkt eine P-Regelung der Steuereinrichtung 320, die parallel zu der D-Regelung erfolgt. Im Rahmen der P-Regelung wird ausgangsseitig ein Steuersignal ST1 zur Steuerung des steuerbaren Verbrauchers 310 erzeugt. Im Rahmen der P-Regelung wird der Verbrauch auf einen vorgegebenen Sollverbrauch geregelt, wobei im Falle einer Abweichung der Netzfrequenz f von einer Sollnetzfrequenz f0 der Verbrauch erhöht oder erniedrigt wird, wobei die Erhöhung oder Erniedrigung proportional zur Abweichung der Netzfrequenz f von der Sollnetzfrequenz f0 ist. Es handelt sich also um eine lineare Regelung, die abhängig von der Differenz zwischen der tatsächlichen Netzfrequenz f und der Sollfrequenz f0 ist.

Die beschriebene Energiespeicherung und Energieentnahme in oder aus dem Zwischenkreiskondensator C kann zusätzlich oder alternativ in einer Batterie B erfolgen.

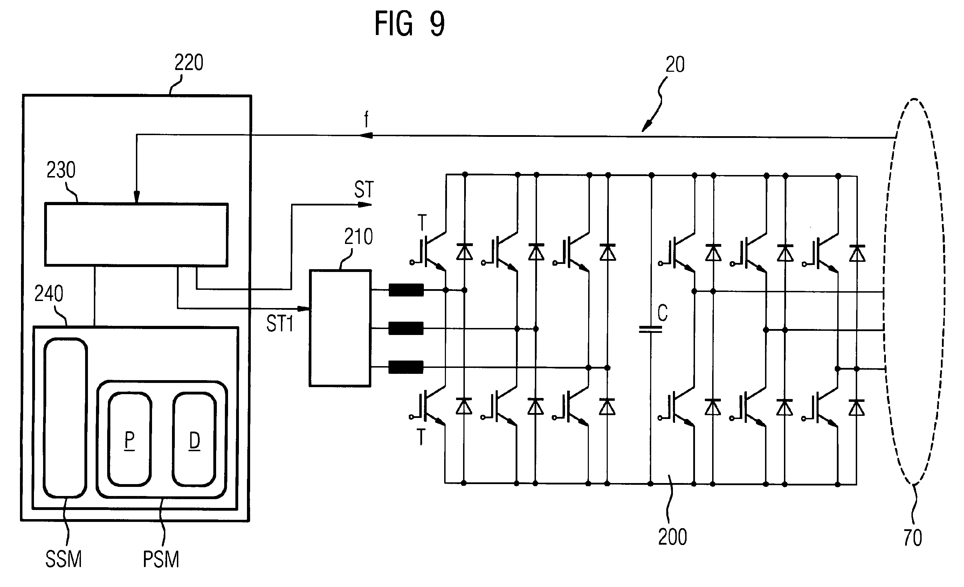

Die Figur 9 zeigt ein drittes Ausführungsbeispiel für eine erfindungsgemäße Energieerzeugungseinrichtung 20, wie sie bei der Energieversorgungsanlage 10 gemäß Figur 1 eingesetzt werden kann. Bei diesem Ausführungsbeispiel weist die Steuereinrichtung 220 eine Primärregelung sowie eine Sekundärregelung auf.

Um die Primärregelung zu ermöglichen, ist in dem Speicher 240 der Steuereinrichtung 220 ein Primärregelungssoftwaremodul PSM abgespeichert. Das Primärregelungssoftwaremodul PSM umfasst das Programmmodul D und das Programmmodul P, die bereits im Zusammenhang mit der Figur 2 beschrieben worden sind. Das Primärregelungssoftwaremodul PSM bewirkt bei Ausführung durch die Recheneinrichtung 230 somit die D-Regelung und die P-Regelung, die im Zusammenhang mit der Figur 2 oben bereits erläutert worden sind.

Die Sekundärregelung wird bei dem Ausführungsbeispiel gemäß Figur 9 durch ein Sekundärregelungssoftwaremodul SSM bewirkt, das bei Ausführung durch die Recheneinrichtung 230 die Sekundärregelung der Steuereinrichtung 220 durchführt. Im Rahmen der Sekundärregelung wird eine von der Primärregelung nicht behebbare Abweichung der Istfrequenz f des Übertragungsnetzes 70 von der Sollnetzfrequenz f0 behoben. Sekundärregelungen dieser Art sind im Stand der Technik bekannt, so dass Ausführungen hierzu nicht erforderlich sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 10 | Energieversorgungsanlage |
| 20 | Energieerzeugungseinrichtung |
| 30 | Energieerzeugungseinrichtung |
| 40 | Energieverbrauchseinrichtung |
| 50 | Energieverbrauchseinrichtung |
| 60 | Energieverbrauchseinrichtung |
| 70 | Energieübertragungsnetz |
| 100 | Steuereinrichtung |
| 200 | Umrichter |
| 210 | Generator |
| 220 | Steuereinrichtung |
| 230 | Recheneinrichtung |
| 240 | Speicher |
| 300 | Umrichter |
| 310 | Verbraucher |
| 320 | Steuereinrichtung |
| 330 | Recheneinrichtung |
| 340 | Speicher |
| | |
| B | Batterie |
| C | Zwischenkreiskondensator |
| D | Programmmodul |
| f | Netzfrequenz |
| f0 | Sollnetzfrequenz |
| P | Programmmodul |
| Pg | Leistung |
| Pv | Energieverbrauch |
| PSM | Primärregelungssoftwaremodul |
| SSM | Sekundärregelungssoftwaremodul |
| ST | Steuersignal |
| ST1 | Steuersignal |
| T | Transistor |

**Patentansprüche**

1. Energieversorgungsanlage (10) mit einer Mehrzahl an Energieerzeugungseinrichtungen (20, 30) und einer Mehrzahl an Energieverbrauchseinrichtungen (40, 50, 60), wobei die Energieerzeugungseinrichtungen (20, 30) und die Energieverbrauchseinrichtungen (40, 50, 60) durch ein Energieübertragungsnetz (70) verbunden sind,
**dadurch gekennzeichnet, dass** zumindest eine der Energieerzeugungseinrichtungen (20, 30) oder zumindest eine der Energieverbrauchseinrichtungen (40, 50, 60) eine Steuereinrichtung (220, 320) aufweist, die geeignet ist, im Falle einer Änderung der Netzfrequenz (f) des Energieübertragungsnetzes (70) die Leistungsabgabe oder Leistungsaufnahme ihrer Energieerzeugungseinrichtung (20, 30) oder Energieverbrauchseinrichtung (40, 50, 60) zumindest kurzzeitig um einen Leistungsänderungswert zu ändern, der proportional zur zeitlichen Änderung (df/dt) der Netzfrequenz (f) des Energieübertragungsnetzes (70) ist.

2. Energieversorgungsanlage (10) nach Anspruch 1, **dadurch gekennzeichnet, dass**

- mit der Steuereinrichtung (220, 320) ein Energiespeicher verbunden ist und
- die Steuereinrichtung (220, 320) derart ausgestaltet ist, dass sie im Falle einer Vergrößerung der Netzfrequenz (f) des Energieübertragungsnetzes (70) eine zur zeitlichen Änderung (df/dt) der Netzfrequenz (f) proportionale Energiemenge aus dem Energieübertragungsnetz (70) entnimmt und in dem Energiespeicher abspeichert und im Falle einer Verkleinerung der Netzfrequenz (f) des Energieübertragungsnetzes (70) eine zur zeitlichen Änderung (df/dt) der Netzfrequenz (f) proportionale Energiemenge aus dem Energiespeicher entnimmt und in das Energieübertragungsnetz (70) einspeist.

3. Energieversorgungsanlage (10) nach Anspruch 2, **dadurch gekennzeichnet, dass** die zumindest eine Energieerzeugungseinrichtung (20, 30) oder die zumindest eine Energieverbrauchseinrichtung (40, 50, 60) einen Umrichter (200, 300) mit mindestens einem Zwischenkreiskondensator (C) aufweist.

4. Energieversorgungsanlage (10) nach Anspruch 3, **dadurch gekennzeichnet, dass**

- der Energiespeicher durch den mindestens einen Zwischenkreiskondensator (C) des Umrichters (200, 300) gebildet wird und
- die Steuereinrichtung (220, 320) derart ausgestaltet ist, dass sie im Falle einer Vergrößerung der Netzfrequenz (f) des Energieübertragungsnetzes (70) eine zur zeitlichen Änderung (df/dt) der Netzfrequenz (f) proportionale Energiemenge aus dem Energieübertragungsnetz (70) entnimmt und in dem Zwischenkreiskondensator (C) des Umrichters (200, 300) abspeichert und im Falle einer Verkleinerung der Netzfrequenz (f) des Energieübertragungsnetzes (70) eine zur zeitlichen Änderung der Netzfrequenz (f) proportionale Energiemenge aus dem Zwischenkreiskondensator (C) des Umrichters (200, 300) entnimmt und in das Energieübertragungsnetz (70) einspeist.

5. Energieversorgungsanlage (10) nach einem der voranstehenden Ansprüche, **dadurch gekennzeichnet, dass** die zumindest eine Energieerzeugungseinrichtung (20, 30) oder die zumindest eine Energieverbrauchseinrichtung (40, 50, 60) als Energiespeicher eine Batterie (B) umfasst, aus der im Falle einer Änderung der Netzfrequenz (f) des Energieübertragungsnetzes (70) Energie entnommen oder Energie eingespeist wird, wobei die entnommene oder eingespeiste Leistung proportional zur zeitlichen Änderung (df/dt) der Netzfrequenz (f) des Energieübertragungsnetzes (70) ist.

6. Energieversorgungsanlage (10) nach einem der voranstehenden Ansprüche, **dadurch gekennzeichnet, dass**

   - die zumindest eine Energieerzeugungseinrichtung (20, 30) oder die zumindest eine Energieverbrauchseinrichtung (40, 50, 60) einen Umrichter (200, 300) mit mindestens einem Zwischenkreiskondensator (C), mindestens eine Batterie (B) und eine Steuereinrichtung (220, 320) aufweist,
   - wobei die Steuereinrichtung (220, 320) derart ausgestaltet ist, dass sie im Falle einer Vergrößerung der Netzfrequenz (f) des Energieübertragungsnetzes (70) eine zur zeitlichen Änderung (df/dt) der Netzfrequenz (f) proportionale Energiemenge aus dem Energieübertragungsnetz (70) entnimmt und in dem Zwischenkreiskondensator (C) und der Batterie (B) abspeichert und im Falle einer Verkleinerung der Netzfrequenz (f) des Energieübertragungsnetzes (70) eine zur zeitlichen Änderung (df/dt) der Netzfrequenz (f) proportionale Energiemenge aus dem Zwischenkreiskondensator (C) und der Batterie (B) entnimmt und in das Energieübertragungsnetz (70) einspeist.

7. Energieversorgungsanlage (10) nach einem der voranstehenden Ansprüche, **dadurch gekennzeichnet, dass** die zumindest eine Energieerzeugungseinrichtung (20, 30) eine Solarenergieerzeugungseinrichtung oder eine Windenergieerzeugungseinrichtung ist.

8. Energieerzeugungseinrichtung (20, 30) für eine ein Energieübertragungsnetz (70) aufweisende Energieversorgungsanlage (10) nach einem der voranstehenden Ansprüche, **dadurch gekennzeichnet, dass** eine Steuereinrichtung (220) der Energieerzeugungseinrichtung (20, 30) derart ausgestaltet ist, dass sie im Falle einer Änderung der Netzfrequenz (f) des Energieübertragungsnetzes (70) die Leistungsabgabe der Energieerzeugungseinrichtung (20, 30) zumindest kurzzeitig um einen Leistungsänderungswert ändert, der proportional zur zeitlichen Änderung (df/dt) der Netzfrequenz (f) des Energieübertragungsnetzes (70) ist.

9. Energieerzeugungseinrichtung (20, 30) nach Anspruch 8, **dadurch gekennzeichnet, dass** die Steuereinrichtung (220) derart ausgestaltet ist, dass sie im Falle einer Vergrößerung der Netzfrequenz (f) des Energieübertragungsnetzes (70) eine zur zeitlichen Änderung (df/dt) der Netzfrequenz (f) proportionale Energiemenge aus dem Energieübertragungsnetz (70) entnimmt und in einem Energiespeicher der Energieerzeugungseinrichtung (20, 30) abspeichert und im Falle einer Verkleinerung der Netzfrequenz (f) des Energieübertragungsnetzes (70) eine zur zeitlichen Änderung (df/dt) der Netzfrequenz (f) proportionale Energiemenge aus dem Energiespeicher entnimmt und in das Energieübertragungsnetz (70) einspeist.

10. Energieverbrauchseinrichtung (40, 50, 60) für eine ein Energieübertragungsnetz (70) aufweisende Energieversorgungsanlage (10) nach einem der voranstehenden Ansprüche, **dadurch gekennzeichnet, dass** eine Steuereinrichtung (320) der Energieverbrauchseinrichtung (40, 50, 60) derart ausgestaltet ist, dass sie im Falle einer Änderung der Netzfrequenz (f) des Energieübertragungsnetzes (70) die Leistungsaufnahme der Energieverbrauchseinrichtung (40, 50, 60) zumindest kurzzeitig um einen Leistungsänderungswert ändert, der proportional zur zeitlichen Änderung (df/dt) der Netzfrequenz (f) des Energieübertragungsnetzes (70) ist.

11. Energieverbrauchseinrichtung (40, 50, 60) nach Anspruch 10, **dadurch gekennzeichnet, dass**

   - die Steuereinrichtung (320) derart ausgestaltet ist, dass sie im Falle einer Vergrößerung der Netzfrequenz (f) des Energieübertragungsnetzes (70) eine zur zeitlichen Änderung (df/dt) der Netzfrequenz (f) proportionale Energiemenge aus dem Energieübertragungsnetz (70) entnimmt und in einem Energiespeicher der Energieverbrauchseinrichtung (40, 50, 60) abspeichert und im Falle einer Verkleinerung der Netzfrequenz (f) des Energieübertragungsnetzes (70) eine zur zeitlichen Änderung (df/dt) der Netzfrequenz (f) proportionale Energiemenge aus dem Energiespeicher entnimmt und in das Energieübertragungsnetz (70) einspeist.

12. Verfahren zum Betreiben einer Energieversorgungsanlage (10) mit einer Mehrzahl an Energieerzeugungseinrichtungen (20, 30) und einer Mehrzahl an Energieverbrauchseinrichtungen (40, 50, 60), wobei die Energieerzeugungseinrichtungen (20, 30) und die Energieverbrauchseinrichtungen (40, 50, 60) durch ein Energieübertragungsnetz (70) verbunden sind,
**dadurch gekennzeichnet, dass**
im Falle einer Änderung der Netzfrequenz (f) des Energieübertragungsnetzes (70) die Leistungsabgabe oder Leistungsaufnahme zumindest einer der Energieerzeugungseinrichtungen (20, 30) oder zumindest einer der Energieverbrauchseinrichtungen (40, 50, 60) zumindest kurzzeitig proportional zur zeitlichen Änderung (df/dt) der Netzfrequenz (f) des Energieübertragungsnetzes (70) geändert wird.

13. Verfahren nach Anspruch 12,
**dadurch gekennzeichnet, dass**
die Änderung der Leistungsabgabe oder Leistungsaufnahme durch Zwischenspeichern von Energie in einem Energiespeicher erfolgt.

14. Verfahren nach Anspruch 13,
**dadurch gekennzeichnet, dass**
die Änderung der Leistungsabgabe oder Leistungsaufnahme durch Zwischenspeichern von Energie zumindest auch in einem Zwischenkreiskondensator (C) eines Umrichters (200, 300) erfolgt.

**Claims**

1. Power supply system (10) comprising a plurality of power generating devices (20, 30) and a plurality of power consuming devices (40, 50, 60), wherein the power generating devices (20, 30) and the power consuming devices (40, 50, 60) are interconnected by a power transmission network (70),
**characterised in that**
at least one of the power generating devices (20, 30) or at least one of the power consuming devices (40, 50, 60) has a control device (220, 320) which is suitable, in the event of a change in the network frequency (f) of the power transmission network (70), to vary the power output or power consumption of its power generating device (20, 30) or power consuming device (40, 50, 60) at least temporarily by a power variation value which is proportional to the rate of change (df/dt) of the network frequency (f) of the power transmission network (70).

2. Power supply system (10) according to claim 1,
**characterised in that**

   - an energy store is connected to the control device (220, 320) and
   - the control device (220, 320) is embodied in such a way that in the event of an increase in the network frequency (f) of the power transmission network (70) it extracts an amount of energy proportional to the rate of change (df/dt) of the network frequency (f) from the power transmission network (70) and stores said energy in the energy store, and in the event of a decrease in the network frequency (f) of the power transmission network (70) it extracts an amount of energy proportional to the rate of change (df/dt) of the network frequency (f) from the energy store and feeds said energy into the power transmission network (70).

3. Power supply system (10) according to claim 2,
**characterised in that**
the at least one power generating device (20, 30) or the at least one power consuming device (40, 50, 60) has an inverter (200, 300) comprising at least one intermediate circuit capacitor (C).

4. Power supply system (10) according to claim 3,
**characterised in that**

   - the energy store is formed by means of the at least one intermediate circuit capacitor (C) of the inverter (200, 300) and
   - the control device (220, 320) is embodied in such a way that in the event of an increase in the network frequency (f) of the power transmission network (70) it extracts an amount of energy proportional to the rate of change (df/dt) of the network frequency (f) from the power transmission network (70) and stores said energy in the intermediate circuit capacitor (C) of the inverter (200, 300), and in the event of a decrease in the network frequency (f) of the power transmission network (70) it extracts an amount of energy proportional to the rate of change of the network frequency (f) from the intermediate circuit capacitor (C) of the inverter (200, 300) and feeds said energy into the power transmission network (70).

5. Power supply system (10) according to one of the preceding claims,
**characterised in that**
the at least one power generating device (20, 30) or the at least one power consuming device (40, 50, 60) includes a battery (B) as an energy store, from which energy is extracted or into which energy is fed in the event of a change in the network frequency (f) of the power transmission network (70), the extracted or fed-in power being proportional to the rate of change (df/dt) of the network frequency (f) of the power transmission network (70).

6. Power supply system (10) according to one of the preceding claims,
   **characterised in that**

   - the at least one power generating device (20, 30) or the at least one power consuming device (40, 50, 60) has an inverter (200, 300) comprising at least one intermediate circuit capacitor (C), at least one battery (B) and a control device (220, 320),
   - wherein the control device (220, 320) is embodied in such a way that in the event of an increase in the network frequency (f) of the power transmission network (70) it extracts an amount of energy proportional to the rate of change (df/dt) of the network frequency (f) from the power transmission network (70) and stores said energy in the intermediate circuit capacitor (C) and the battery (B), and in the event of a decrease in the network frequency (f) of the power transmission network (70) it extracts an amount of energy proportional to the rate of change (df/dt) of the network frequency (f) from the intermediate circuit capacitor (C) and the battery (B) and feeds said energy into the power transmission network (70).

7. Power supply system (10) according to one of the preceding claims,
   **characterised in that**
   the at least one power generating device (20, 30) is a solar power generating device or a wind power generating device.

8. Power generating device (20, 30) for a power supply system (10) having a power transmission network (70) according to one of the preceding claims,
   **characterised in that**
   a control device (220) of the power generating device (20, 30) is embodied in such a way that in the event of a change in the network frequency (f) of the power transmission network (70) it varies the power output of the power generating device (20, 30) at least temporarily by a power variation value which is proportional to the rate of change (df/dt) of the network frequency (f) of the power transmission network (70).

9. The power generating device (20, 30) according to claim 8,

**characterised in that**
the control device (220) is embodied in such a way that in the event of an increase in the network frequency (f) of the power transmission network (70) it extracts an amount of energy proportional to the rate of change (df/dt) of the network frequency (f) from the power transmission network (70) and stores said energy in an energy store of the power generating device (20, 30), and in the event of a decrease in the network frequency (f) of the power transmission network (70) it extracts an amount of energy proportional to the rate of change (df/dt) of the network frequency (f) from the energy store and feeds said energy into the power transmission network (70).

10. Power consuming device (40, 50, 60) for a power supply system (10) having a power transmission network (70) according to one of the preceding claims,
    **characterised in that**
    a control device (320) of the power consuming device (40, 50, 60) is embodied in such a way that in the event of a change in the network frequency (f) of the power transmission network (70) it varies the power consumption of the power consuming device (40, 50, 60) at least temporarily by a power variation value which is proportional to the rate of change (df/dt) of the network frequency (f) of the power transmission network (70).

11. Power consuming device (40, 50, 60) according to claim 10,
    **characterised in that**

    - the control device (320) is embodied in such a way that in the event of an increase in the network frequency (f) of the power transmission network (70) it extracts an amount of energy proportional to the rate of change (df/dt) of the network frequency (f) from the power transmission network (70) and stores said energy in an energy store of the power consuming device (40, 50, 60), and in the event of a decrease in the network frequency (f) of the power transmission network (70) it extracts an amount of energy proportional to the rate of change (df/dt) of the network frequency (f) from the energy store and feeds said energy into the power transmission network (70).

12. Method for operating a power supply system (10) comprising a plurality of power generating devices (20, 30) and a plurality of power consuming devices (40, 50, 60), wherein the power generating devices (20, 30) and the power consuming devices (40, 50, 60) are interconnected by a power transmission network (70),
    **characterised in that**
    in the event of a change in the network frequency (f) of the power transmission network (70) the power output or power consumption of at least one of the power generating devices (20, 30) or at least one of the power consuming devices (40, 50, 60) is varied at least temporarily in proportion to the rate of change (df/dt) of the network frequency (f) of the power transmission network (70).

13. Method according to claim 12,
**characterised in that**
the change in the power output or power consumption is effected through buffering of energy in an energy store.

14. Method according to claim 13,
**characterised in that**
the change in the power output or power consumption is effected through buffering of energy at least also in an intermediate circuit capacitor (C) of an inverter (200, 300).

**Revendications**

1. Installation ( 10 ) d'alimentation en énergie ayant une pluralité de dispositifs ( 20, 30 ) de production d'énergie et une pluralité de dispositifs ( 40, 50, 60 ) de consommation d'énergie, les dispositifs ( 20, 30 ) de production d'énergie et les dispositifs ( 40, 50, 60 ) de consommation d'énergie étant reliés par un réseau ( 70 ) de transfert d'énergie,
**caractérisé en ce que**
au moins l'un des dispositifs ( 20, 30 ) de production d'énergie ou au moins l'un des dispositifs ( 40, 50, 60 ) de consommation d'énergie a un dispositif ( 220, 320 ) de commande, qui est propre, s'il se produit une modification de la fréquence ( f ) du réseau ( 70 ) de transfert d'énergie, à modifier la puissance fournie ou la puissance reçue de son dispositif ( 20, 30 ) de production d'énergie ou de son dispositif ( 40, 50, 60 ) de consommation d'énergie, au moins pendant une courte durée, d'une valeur de modification de la puissance qui est proportionnelle à la variation ( df/dt ) en fonction du temps de la fréquence ( f ) du réseau ( 70 ) de transfert d'énergie.

2. Installation ( 10 ) d'alimentation en énergie suivant la revendication 1,
**caractérisé en ce que**

- un accumulateur d'énergie est relié au dispositif ( 220, 320 ) de commande et
- le dispositif ( 220, 320 ) de commande est conformé de manière à, s'il se produit une augmentation de la fréquence ( f ) du réseau ( 70 ) de transfert d'énergie, prélever du réseau ( 70 ) de transfert d'énergie une quantité d'énergie proportionnelle à la variation ( df/dt ) en fonction du temps de la fréquence ( f ) du réseau et à l'emmagasiner dans l'accumulateur d'énergie et, s'il se produit une diminution de la fréquence ( f ) du réseau ( 70 ) de transfert d'énergie, à prélever de l'accumulateur d'énergie une quantité d'énergie proportionnelle à la variation ( df/dt ) en fonction du temps de la fréquence ( f ) du réseau et à l'injecter dans le réseau ( 70 ) de transfert d'énergie.

3. Installation ( 10 ) d'alimentation suivant la revendication 2,
**caractérisé en ce que**
le au moins un dispositif ( 20, 30 ) de production d'énergie ou le au moins un dispositif ( 40, 50, 60 ) de consommation d'énergie comporte un convertisseur ( 200, 300 ) ayant au moins un condensateur ( C ) de circuit intermédiaire.

4. Installation ( 10 ) d'alimentation suivant la revendication 3,
**caractérisé en ce que**

- l'accumulateur d'énergie est formé par le au moins un condensateur ( C ) intermédiaire du convertisseur ( 200, 300 ) et
- le dispositif ( 220, 320 ) de commande est conformé de manière à, s'il se produit une augmentation de la fréquence ( f ) du réseau ( 70 ) de transfert d'énergie, prélever du réseau ( 70 ) de transfert d'énergie une quantité d'énergie proportionnelle à la variation ( df/dt ) en fonction du temps de la fréquence ( f ) du réseau et à l'emmagasiner dans le condensateur ( C ) de circuit intermédiaire du convertisseur ( 200, 300 ) et, s'il se produit une diminution de la fréquence ( f ) du réseau ( 70 ) de transfert d'énergie, à prélever du condensateur ( C ) de circuit intermédiaire du convertisseur ( 200, 300 ) une quantité d'énergie proportionnelle à la variation en fonction du temps de la fréquence ( f ) du réseau et à l'injecter dans le réseau ( 70 ) de transfert d'énergie.

5. Installation ( 10 ) d'alimentation suivant l'une des revendications précédentes,
**caractérisé en ce que**
le au moins un dispositif ( 20, 30 ) de production d'énergie ou le au moins un dispositif ( 40, 50, 60 ) de consommation d'énergie comprend comme accumulateur d'énergie une batterie ( B ) de laquelle, dans le cas d'une variation de la fréquence ( f ) du réseau ( 70 ) de transfert d'énergie, de l'énergie est prélevée ou dans laquelle de l'énergie est injectée, la puissance prélevée ou injectée étant proportionnelle à la variation ( df/dt ) en fonction du temps de la fréquence ( f ) du réseau ( 70 ) de transfert d'énergie.

**6.** Installation ( 10 ) d'alimentation suivant l'une des revendications précédentes, **caractérisé en ce que**

- le au moins un dispositif ( 20, 30 ) de production d'énergie ou le au moins un dispositif ( 40, 50, 60 ) de consommation d'énergie a un convertisseur ( 200, 300 ) ayant au moins un condensateur ( C ) de circuit intermédiaire, au moins une batterie ( B ) et un dispositif ( 220, 320 ) de commande,
- dans laquelle le dispositif ( 220, 320 ) de commande est conformé de manière à, s'il se produit une augmentation de la fréquence ( f ) du réseau ( 70 ) de transfert d'énergie, prélever du réseau ( 70 ) de transfert d'énergie une quantité d'énergie proportionnelle à la variation ( df/dt ) en fonction du temps de la fréquence ( f ) du réseau et à l'emmagasiner dans le condensateur ( C ) de circuit intermédiaire et dans la batterie ( B ) et, s'il se produit une diminution de la fréquence ( f ) du réseau ( 70 ) de transfert d'énergie, à prélever du condensateur ( C ) de circuit intermédiaire et de la batterie ( B ) une quantité d'énergie proportionnelle à la variation ( df/dt ) en fonction du temps de la fréquence ( f ) du réseau et à l'injecter dans le réseau ( 70 ) de transfert d'énergie.

**7.** Installation ( 10 ) d'alimentation suivant l'une des revendications précédentes, **caractérisé en ce que** au moins un dispositif ( 20, 30 ) de production d'énergie est un dispositif de production d'énergie solaire ou un dispositif à éolienne.

**8.** Dispositif ( 20, 30 ) de production d'énergie pour une installation ( 10 ) d'alimentation en énergie ayant un réseau ( 70 ) de transfert d'énergie suivant l'une des revendications précédentes, **caractérisé en ce que** un dispositif ( 220 ) de commande du dispositif ( 20, 30 ) de production d'énergie est conformé de manière à, s'il se produit une variation de la fréquence ( f ) du réseau ( 70 ) de transfert d'énergie, modifier la puissance fournie par le dispositif ( 20, 30 ) de production d'énergie, au moins sur une courte durée, d'une valeur de modification de la puissance qui est proportionnelle à la variation ( df/dt ) en fonction du temps de la fréquence ( f ) du réseau ( 70 ) de transfert d'énergie.

**9.** Dispositif ( 20, 30 ) de production d'énergie suivant la revendication 8, **caractérisé en ce que** le dispositif ( 220 ) de commande est conformé de manière à, s'il se produit une augmentation de la fréquence ( f ) du réseau ( 70 ) de transfert d'énergie, prélever du réseau ( 70 ) de transfert d'énergie une quantité d'énergie proportionnelle à la variation ( df/dt ) en fonction du temps de la fréquence ( f ) du réseau et à l'emmagasiner dans l'accumulateur d'énergie et, s'il se produit une diminution de la fréquence ( f ) du réseau ( 70 ) de transfert d'énergie, à prélever de l'accumulateur d'énergie une quantité d'énergie proportionnelle à la variation ( df/dt ) en fonction du temps de la fréquence ( f ) du réseau, et à l'injecter dans le réseau ( 70 ) de transfert d'énergie.

**10.** Dispositif ( 40, 50, 60 ) de consommation d'énergie pour une installation ( 10 ) d'alimentation en énergie qui a un réseau ( 70 ) de transfert d'énergie suivant l'une des revendications précédentes, **caractérisé en ce que** un dispositif ( 320 ) de commande du dispositif ( 40, 50, 60 ) de consommation d'énergie est conformé de manière à, s'il se produit une variation de la fréquence ( f ) du réseau ( 70 ) de transfert d'énergie, modifier la puissance absorbée par le dispositif ( 40, 50, 60 ) de consommation d'énergie, au moins sur une courte durée, d'une valeur de modification de puissance qui est proportionnelle à la variation ( df/dt ) en fonction du temps, de la fréquence ( f ) du réseau ( 70 ) de transfert d'énergie.

**11.** Dispositif ( 40, 50, 60 ) de consommation d'énergie suivant la revendication ( 10 ), **caractérisé en ce que** le dispositif ( 320 ) de commande est conformé de manière à prélever, s'il se produit une augmentation de la fréquence du réseau ( 70 ) de transfert d'énergie, une quantité d'énergie proportionnelle à la variation ( df/dt ) en fonction du temps, de la fréquence ( f ) du réseau et à l'emmagasiner dans un accumulateur d'énergie du dispositif ( 40, 50, 60 ) de consommation d'énergie et s'il se produit une diminution de la fréquence ( f ) du réseau ( 70 ) de transfert d'énergie, à prélever de l'accumulateur d'énergie une quantité d'énergie proportionnelle à la variation ( df/dt ) en fonction du temps de la fréquence ( f ) du réseau et à l'injecter dans le réseau ( 70 ) de transfert d'énergie.

**12.** Procédé pour faire fonctionner une installation ( 10 ) d'alimentation en énergie ayant une pluralité de dispositifs ( 20, 30 ) de production d'énergie et une pluralité de dispositifs ( 40, 50, 60 ) de consommation d'énergie, les dispositifs ( 20, 30 ) de production d'énergie et les dispositifs ( 40, 50, 60 ) de consommation d'énergie étant reliés par un réseau ( 70 ) de transfert d'énergie, **caractérisé en ce que** s'il se produit une variation de la fréquence ( f ) du réseau ( 70 ) de transfert d'énergie, on modifie la puissance fournie ou la puissance absorbée d'au moins l'un des dispositifs ( 20, 30 ) de production d'énergie ou d'au moins l'un des dispositifs ( 40, 50, 60 ) de consommation d'énergie, au moins pendant une courte durée, proportionnellement à la variation ( df/dt ) en fonction du temps, de la fréquence ( f ) du réseau ( 70 ) de transfert d'énergie.

13. Procédé suivant la revendication 12,
**caractérisé en ce que**
l'on effectue la modification de la puissance fournie ou de la puissance absorbée par l'emmagasinage intermédiaire d'énergie dans un accumulateur d'énergie.

14. Procédé suivant la revendication 13,
**caractérisé en ce que**
l'on effectue la modification de la puissance fournie ou de la puissance absorbée par l'accumulateur intermédiaire d'énergie au moins également dans un condensateur ( C ) de circuit intermédiaire d'un convertisseur ( 200, 300 ).

FIG 1

## FIG 2

EP 2 850 710 B1

EP 2 850 710 B1

# FIG 3

FIG 4

FIG 5

EP 2 850 710 B1

FIG 6

# FIG 7

EP 2 850 710 B1

FIG 8

# FIG 9

EP 2 850 710 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005029670 A1